# EUROPÄISCHE PATENTSCHRIFT

(11) **EP 2 578 918 B1**
(45) Veröffentlichungstag und Bekanntmachung des Hinweises auf die Patenterteilung: **14.01.2015**
(21) Anmeldenummer: 12184607.5
(22) Anmeldetag: 17.09.2012
(51) Int. Cl.: F16L 33/08

(54) **Halteelement für eine Schellenfixierung**
Holding means for a clamp
Element de maintien pour un clamp

(30) Priorität: 06.10.2011 DE 202011106374 U
(43) Veröffentlichungstag der Anmeldung: 10.04.2013
(73) Patentinhaber: VERITAS AG, 63571 Gelnhausen (DE)
(72) Erfinder: CÖL, Isa, 60385 Frankfurt (DE)
(74) Vertreter: Klinski, Robert

(56) Entgegenhaltungen:
- EP-A1- 2 163 801
- EP-A1- 2 380 635
- US-B1- 6 494 415

## Beschreibung

Die Erfindung betrifft ein Halteelement für eine Schellenfixierung nach dem Oberbegriff des Patentanspruchs 1.

Schlauchschellen dienen als Haltevorrichtungen, die auf dem Umfang eines Schlauchendes angebracht werden, um das Schlauchende mit einem Rohrstutzen zu verbinden, über den der Schlauch zuvor gestülpt worden ist. Damit sich die Schlauchschellen nicht von dem Schlauchende lösen, werden häufig zusätzliche Halteelemente an der Schlauchschelle angebracht.

Bekannt ist eine Haltevorrichtung für ein Schlauchende, das eine Schlauchschelle enthält, die an wenigstens einer Stelle einen quer zum Umfang des Schlauchendes verlaufenden Verklemmungsteil aufweist, der in die Innenseite des Schlauchendes eingreift (DE 103 24 236 A1).

Die Druckschrift EP 2163 801 betrifft eine Schellenfixierung für ein Schlauchende mit einem Halteelement, bei dem das Halteelement eine Auflagefläche für eine Schlauchschelle sowie eine Platte aufweist. Senkrecht zu dieser Platte ist ein Eingreifelement angeordnet, das in Richtung des Schlauchs weist.

Die Druckschrift EP 2 380 635 A1 betrifft ein Montagegerät für eine Sprinkleranlage. Eine Halterung weist einen U-förmigen Klammerkörper mit einer geschlossenen Fläche auf, die zwischen parallelen oberen und unteren Flächen und angeordnet ist.

Die Druckschrift US 6,494, 415 B1 betrifft eine Mehrzweck-Hängevorrichtung. Die Hängevorrichtung umfasst ein Aufhängerelement mit einer rechteckig geformten Hängeelementbasis und den Hängeelementschenkeln, die sich von dem Hängeelementbasis erstrecken und einen Einsetzraum für eine Leitung zwischen diesen definieren.

Weiterhin ist eine Schellenfixierung bekannt, bei der eine Schlauchschelle mit einem Halteelement verbunden ist (US 3 454 996; US 3 477 106). Das Haltelement ist mit der Unterseite der Schlauchschelle verbunden und weist Eingreifelemente auf, mit denen es mit einem Schlauchende verbindbar ist, so dass die Schlauchschelle an einem bestimmten Ort des Schlauchs fest angeordnet werden kann.

Des Weiteren ist eine Schlauchschelle bekannt, mit einem Schellenband, einer Spanneinrichtung und einer Positionieranordnung, die mindestens einen Positionierer mit einer Basis und einer Kralle, die in eine Schlauchwand eindrückbar ist, aufweist (DE 10 2006 048 344 A1). Die Kralle weist einen von der Basis in eine Eindrückrichtung nach innen vorstehenden Abschnitt auf, wobei die Kralle ein Ende besitzt, das mit dem Abschnitt einen stumpfen Winkel einschließt.

Schließlich ist eine Schellenfixierung für ein Schlauchende mit zumindest einem Halteelement bekannt, wobei das Halteelement eine Trägerplatte für eine Schlauchschelle und mindestens einen nach oben gerichteten Schenkel aufweist (DE 10 2008 013 207).

An dem Halteelement ist mindestens ein Eingreifelement angeordnet, das in ein Schlauchende eingreifen kann.

Aufgabe der vorliegenden Erfindung ist es, ein Halteelement für eine Schellenfixierung bereitzustellen, das kompakt ausgebildet und preiswert herzustellen ist.

Diese Aufgabe wird durch die Merkmale des Patentanspruchs 1 gelöst.

Die Erfindung betrifft somit Halteelemente für eine Schellenfixierung. Die Halteelemente weisen eine Trägerplatte für die Auflage einer Schlauchschelle auf mit wenigstens einen ersten Schenkel, der an einer ersten Seite der Trägerplatte angeordnet ist, sowie wenigstens einen zweiten Schenkel, der an einer zweiten Seite der Trägerplatte angeordnet ist, wobei der zweite Schenkel zwischen Eingreifelementen angeordnet ist.

Der an der ersten Seite angeordnete Schenkel sowie der an der zweiten Seite angeordnete Schenkel weisen dabei im Wesentlichen in eine erste Richtung. Die Eingreifelemente weisen in eine zweite Richtung, die der ersten Richtung entgegengesetzt ist.

Vorteilhaft bei diesen Halteelementen ist, dass diese sehr einfach und kompakt aufgebaut sind, da die Halteelemente lediglich nur sehr wenige Schenkel, vorzugsweise zwei oder drei Schenkel, aufweisen. Die Eingreifelemente sind dabei direkt an der Trägerplatte für eine Schlauchschelle angebracht. Bei der Herstellung der Halteelemente ist daher der Schnittabfall sehr gering. Dadurch sind auch die Herstellungskosten der Halteelemente gering.

Vorteilhaft ist ferner, dass die Halteelemente näher an dem Schlauchende montiert werden können, womit die Schlauchschelle, welche durch die Halteelemente positioniert wird, weiter hinten am Anschlussstutzen angeordnet werden kann, der in den Schlauch eingebracht ist. Der Abstand der Schlauchschelle zum Schlauchende kann dabei weniger als 5 mm betragen. Dadurch kann der Schlauch noch fester an dem Anschlussstutzen fixiert werden.

Ausführungsbeispiele der Erfindung sind in den Zeichnungen dargestellt und im Folgenden näher beschrieben. Es zeigen:
- Figur 1: eine erste Variante eines Halteelements;
- Figur 2: eine weitere Ansicht des in Figur 1 gezeigten Halteelements;
- Figur 3: eine Schellenfixierung, die an einem Schlauchende eines Schlauchs angeordnet ist;
- Figur 4: eine zweite Variante eines Halteelements;
- Figur 5: eine dritte Variante eines Halteelements;
- Figur 6: eine vierte Variante eines Halteelements;
- Figur 7: eine fünfte Variante eines Halteelements.

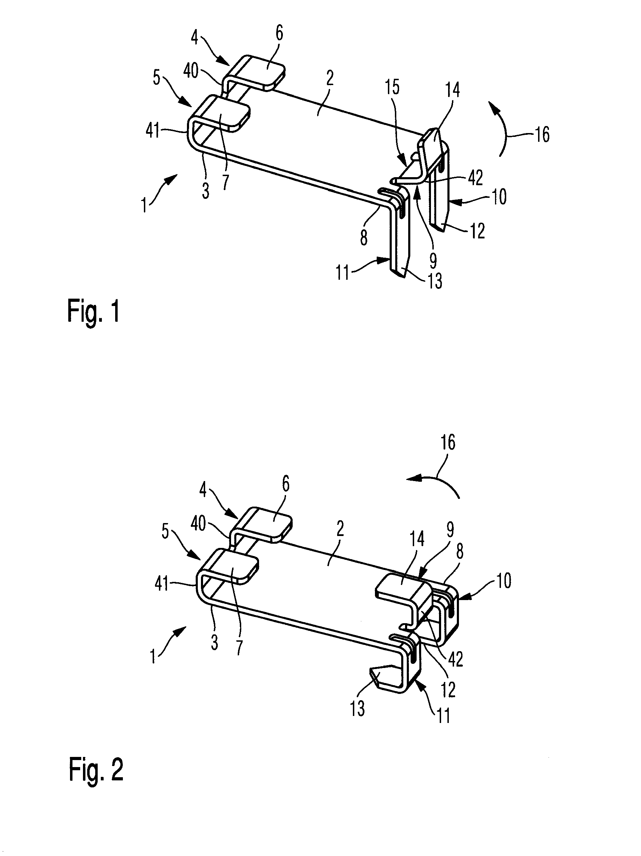

In Figur 1 ist eine erste nicht zur Erfindung gehörende Variante eines Halteelements für eine Schellenfixierung dargestellt. Das Halteelement 1 weist eine Trägerplatte 2 auf, auf der eine Schlauchschelle angeordnet werden kann, die jedoch in Figur 1 nicht gezeigt ist. An einer ersten Seite 3 des Halteelements 1 sind zwei nebeneinander angeordnete und im Wesentlichen L-förmige Schenkel 4 und 5 angebracht, die in eine erste Richtung gerichtet sind. Diese L-förmigen Schenkel 4, 5 weisen jeweils einen ersten Abschnitt 40, 41, der direkt an der Trägerplatte 2 und im Wesentlichen senkrecht zu dieser Trägerplatte 2 angeordnet ist, sowie jeweils einen zweiten Abschnitt 6, 7 auf, der im Wesentlichen parallel zu der Trägerplatte 2 angeordnet ist. An einem der ersten Seite 3 gegenüberliegenden Seite 8 der Trägerplatte 2 des Halteelements 1 befindet sich ein dritter Schenkel 9, der ebenfalls im Wesentlichen L-förmig ausgebildet ist. Dieser dritte Schenkel 9 ist gegenüber den beiden anderen Schenkeln 4, 5 angeordnet. Der Schenkel 9 weist ebenfalls zwei Abschnitte 14 und 42 auf. Dabei ist der erste Abschnitt 42 direkt an der Trägerplatte 2 angeordnet. An diesen ersten Abschnitt 42 schließt sich ein zweiter Abschnitt 14 an, der im Wesentlichen senkrecht zu dem ersten Abschnitt 42 angeordnet ist, so dass der Schenkel 9 die Form eines L besitzt. Der Schenkel 9 kann mittels eines Werkzeugs oder per Hand derart angeordnet werden, dass der Schenkel 9 mit einem Abschnitt 14 ebenfalls parallel zur Trägerplatte 2 angeordnet ist. Dazu wird der Schenkel 9 in dem Bereich 15, an dem der Schenkel 9 an der Trägerplatte 2 des Halteelements 1 angebracht ist, solange in Richtung des Pfeils 16 gebogen, bis der Schenkel 9 mit seinem zweiten Abschnitt 14 im Wesentlichen parallel zur Trägerplatte 2 ausgerichtet ist.

In diesem Fall ist der erste Abschnitt 42 im Wesentlichen senkrecht zu der Trägerplatte 2 ausgerichtet.

Zu beiden Seiten des L-förmigen Schenkels 9 ist jeweils ein Eingreifelement 10, 11 angeordnet. Die beiden Eingreifelemente 10, 11 weisen dabei in eine zweite Richtung, die der ersten Richtung, in welche die Abschnitte 40, 41 der Schenkel 4, 5, 9 weisen, entgegengesetzt ist. Die Eingreifelemente 10, 11 weisen jeweils ein spitzes Ende 12, 13 auf, mit denen die Eingreifelemente 10, 11 in ein Ende eines Schlauchs eingebracht werden können. Mit den Eingreifelementen 10, 11 ist es somit möglich, das Halteelement 1 fest an dem Schlauch zu fixieren. Ein Schlauch ist in Figur 1 allerdings nicht dargestellt.

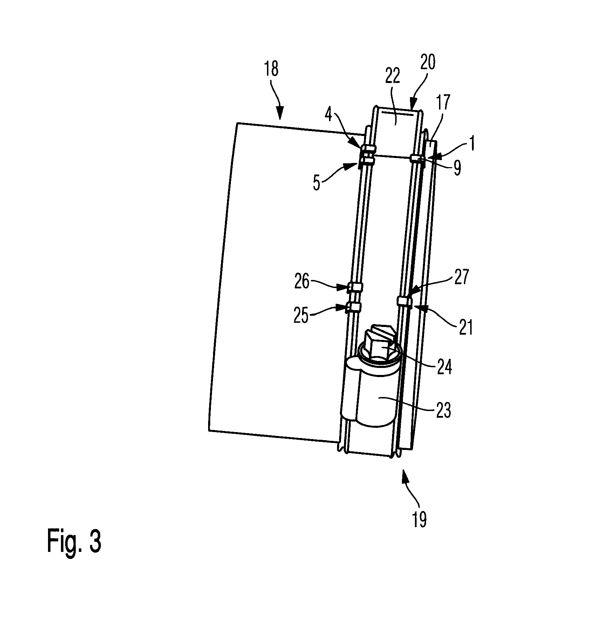

Figur 2 zeigt das Halteelement 1 der Figur 1, nachdem es als Teil einer Schellenfixierung in ein Schlauchende eines Schlauchs eingebracht worden ist. Es ist somit das Halteelement 1 im montierten Zustand dargestellt. Eine Schlauchschelle sowie ein Schlauch sind jedoch in Figur 3 der Übersicht halber nicht dargestellt.

Die beiden nebeneinander angeordneten Schenkel 4, 5 sind an der Trägerplatte 2 des Halteelements 1 angebracht und liegen dem Schenkel 9 gegenüber. Der Schenkel 9 ist direkt an der Trägerplatte 2 angeordnet und in Richtung des Pfeils 16 gebogen worden, so dass der Schenkel 9 wie auch die beiden anderen Schenkel 4 und 5 in die erste Richtung ausgerichtet ist. Alle Schenkel 4, 5, 9 weisen einen ersten Abschnitt 40, 41, 42 auf, der direkt an der Trägerplatte 2 und senkrecht zu dieser Trägerplatte 2 angeordnet ist. Die jeweils an den ersten Abschnitten 40, 41, 42 angeordneten zweiten Abschnitte 6, 7, 14 sind parallel zur Trägerplatte 2 angeordnet, so dass die in Figur 3 nicht dargestellte Schlauchschelle zumindest teilweise auf der Trägerplatte 2 aufliegt und somit zwischen der Trägerplatte 2 und den Schenkeln 4, 5, 9 angeordnet ist.

Die beiden Eingreifelemente 10, 11 sind dabei in den nicht dargestellten Schlauch eingebracht worden. Die Enden 12, 13 der Eingreifelemente 10, 11 sind mittels eines Werkzeugs gebogen worden, nachdem diese in den Schlauch eingebracht worden sind, so dass diese Enden 12, 13 parallel zur Trägerplatte 2 ausgerichtet sind, wodurch das Halteelement 1 fest an dem Schlauch angeordnet ist. Da die Enden 12, 13 umgebogen worden sind, kann das Halteelement 2 nicht verrutschen oder vom Schlauch fallen.

Figur 3 zeigt eine an einem Schlauchende 17 eines Schlauchs 18 angeordnete Schellenfixierung 19. Die Schellenfixierung 19 besteht aus einer Schlauchschelle 20 und mehreren Halteelementen, wobei nur zwei Halteelemente 1 und 21 zu sehen sind. Die Schlauchschelle 20 ist ein gekrümmtes Band 22 mit integrierter Federeinlage. Die Schlauchschelle 20 weist ein Schraubengehäuse 23 mit einer Schraube 24 auf. Mit dieser Schraube 24 kann der Umfang des Bands 22 verändert werden.

Die Schlauchschelle 20 liegt auf Trägerplatten der jeweiligen Halteelemente 1, 21 auf, so dass die Trägerplatten der Halteelemente 1, 21 in der Figur 3 nicht zu sehen sind. Die Halteelemente 1, 21 sind über Eingreifelemente, die in das Schlauchende 17 eingebracht worden sind und in Figur 3 daher nicht zu sehen sind, mit dem Schlauch 18 verbunden. Zu erkennen sind mehrere Schenkel 4, 5, 9 bzw. 25, 26, 27 der entsprechenden Halteelemente 1 bzw. 21. Die Schenkel 4, 5, 9 bzw. 25, 26, 27 der beiden Halteelemente 1 bzw. 21 umgreifen dabei die Schlauchschelle 20, so dass die Schlauchschelle 20 fest in dem entsprechenden Halteelement 1, 21 angeordnet ist und nicht verrutschen kann.

Im Folgenden wird das Fixieren der Schlauchschelle 20 mittels der Halteelemente 1, 21 an dem Schlauch 18 beschrieben. Dabei werden zuerst die Eingreifelemente der entsprechenden Halteelemente 1, 21 in das Schlauchende 17 des Schlauchs 18 eingebracht. Damit die Halteelemente 1, 21 nicht mehr aus dem Schlauchende 17 herausfallen können, werden die Enden der Eingreifelemente gebogen, nachdem diese in den Schlauch 18 eingebracht worden sind, so dass die Halteelemente 1, 21 fest mit dem Schlauch 18 verbunden sind. Es kann dann ein Anschlussstutzen in den Schlauch 18 eingebracht werden.

Anschließend wird die Schlauchschelle 20 auf die Trägerplatten der jeweiligen Halteelemente 1, 21 aufgelegt. Sodann wird die Schraube 24 fest gezogen, so dass die Schlauchschelle 20 fest auf den jeweiligen Halteelementen 1, 21 angeordnet ist. Schließlich werden die Schenkel 9, 27, die gegenüber den beiden nebeneinander angeordneten Schenkeln 4, 5 bzw. 25, 26 liegen, gebogen, so dass alle Schenkel 4, 5, 9 bzw. 25, 26, 27 der Halteelemente 1, 21 die Schlauchschelle 20 teilweise umgeben. Dadurch kann die Schlauchschelle 20 selbst dann nicht mehr aus den Halteelementen 1, 21 fallen, wenn sich die Schraube 24 lockern sollte.

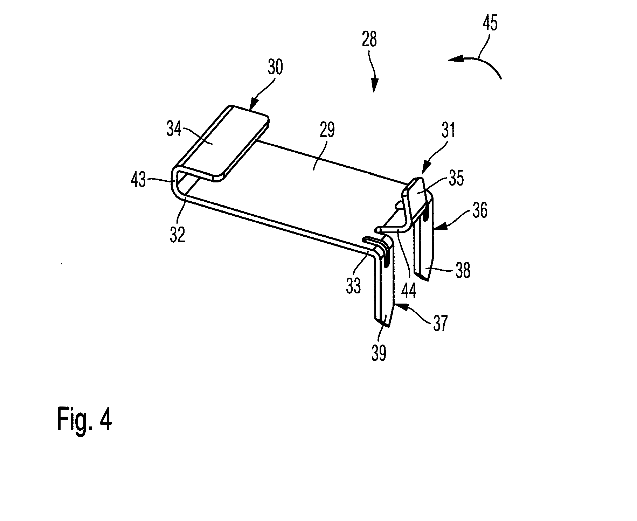

In Figur 4 ist eine erste Variante des in Figur 1 dargestellten Halteelements 1 gezeigt.

Dieses Halteelement 28 umfasst eine Trägerplatte 29 für die Auflage einer Schlauchschelle, an der zwei gegenüberliegende Schenkel 30, 31 angeordnet sind. Der erste Schenkel 30 ist dabei an einer ersten Seite 32 der Trägerplatte 29 und der zweite Schenkel 31 an einer zweiten Seite 33 die Trägerplatte 29 angebracht. Die in Figur 4 gezeigte Variante eines Halteelements 28 ist damit noch einfacher aufgebaut als die in Figur 1 gezeigte Variante, weil das Halteelement 28 nur zwei Schenkel 30, 31 aufweist. Beide Schenkel 30, 31 sind L-förmig aufgebaut. Die Schenkel 30, 31 umfassen jeweils einen ersten Abschnitt 43 bzw. 44, die direkt an der Trägerplatte anschließen, sowie einen zweiten Abschnitt 34 bzw. 35, der an dem ersten Abschnitt 43 bzw. 44 angeordnet ist. Der Schenkel 31 kann dabei in Richtung des Pfeils 45 gebogen werden, so dass der zweite Abschnitt 35 wie auch der Abschnitt 34 des Schenkels 30, parallel zur Trägerplatte 29 des Halteelements 28 ausgerichtet ist.

Dadurch kann eine in Figur 4 nicht gezeigte Schlauchschelle zwischen den beiden Abschnitten 34, 35 und der Trägerplatte 29 angeordnet werden. In Figur 4 ist der Schenkel 30 breiter als der Schenkel 31, da sich der Schenkel 30 über die gesamte Breite der Seite 32 erstreckt. Es versteht sich jedoch, dass der Schenkel 30 auch eine geringere Breite aufweisen kann und beispielsweise genauso groß sein kann wie der Schenkel 31. Dabei kann ein solcher schmalerer Schenkel direkt gegenüber dem Schenkel 31 liegen.

Wie in Figur 4 zu erkennen, ist der Schenkel 31 zwischen zwei Eingreifelementen 36, 37 angeordnet, die sich ebenfalls direkt an die Trägerplatte 29 anschließen. Die Eingreifelemente 36, 37 sind dabei in eine zweite Richtung ausgerichtet, die der ersten Richtung, in die die Schenkel 30, 31 weisen, entgegengesetzt ist.

Die Eingreifelemente 36, 37 besitzen jeweils ein spitzes Ende 38, 39, mittels dem die Eingreifelemente 36, 37 in ein Schlauchende eingeführt werden können.

Die Halteelemente 1, 21, 28 für eine Schellenfixierung 19 enthalten somit eine Trägerplatte 2, 29 für die Auflage einer Schlauchschelle 20 mit wenigstens einen ersten Schenkel 4, 6; 25, 26; 30, der an einer ersten Seite 3, 32 der Trägerplatte 2, 29 angeordnet ist, sowie wenigstens einen zweiten Schenkel 9, 27, 31, der an einer zweiten Seite 8, 33 der Trägerplatte 2, 29 angeordnet ist, wobei der zweite Schenkel 9, 27, 31 zwischen Eingreifelementen 10, 11; 36, 37 angeordnet ist.

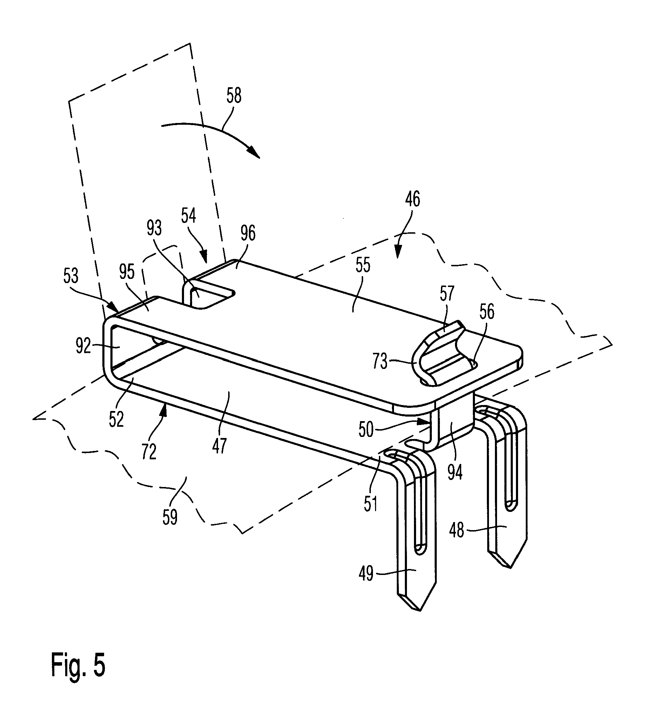

In Figur 5 ist eine zweite erfindungsgemässe Variante eines Halteelements 46 gezeigt. Das Halteelement 46 weist ebenfalls eine Trägerplatte 47 auf, auf der eine durch eine gestrichelte Linie dargestellte Schlauchschelle 59 aufliegen kann. An einer zweiten Seite 51 der Trägerplatte 47 ist zwischen zwei Eingreifelementen 48, 49 ein Schenkel 50 angeordnet. Auch diese Eingreifelemente 48, 49 besitzen ein spitzes Ende, das gebogen werden kann, nachdem die Eingreifelemente 48, 49 in einen nicht dargestellten Schlauch eingebracht worden sind. An der der zweiten Seite 51 gegenüberliegenden ersten Seite 52 der Trägerplatte 47 sind zwei nebeneinander angeordnete Schenkel 53, 54 vorgesehen, die die Trägerplatte 47 mit einer oberhalb der Trägerplatte 47 angeordneten Fixierplatte 55 verbinden.

Alle Schenkel 50, 53, 54 des Halteelements 46 weisen einen ersten Abschnitt 94, 92, 93 auf, der direkt an der Trägerplatte 47 und senkrecht zu dieser Trägerplatte 47 angeordnet ist. Die beiden nebeneinander angeordneten Schenkel 53, 54 weisen einen jeweils an den ersten Abschnitten 92, 93 angeordneten zweiten Abschnitt 95, 96 auf, wobei diese zweiten Abschnitte 95, 96 parallel zur Trägerplatte 2 angeordnet sind. An den beiden zweiten Abschnitten 95, 96 der beiden Schenkel 53 und 54 schließt sich die Fixierplatte 55 an.

Die beiden nebeneinander angeordneten Schenkel 53, 54 bilden damit mit der Trägerplatte 47 sowie der parallel dazu angeordneten Fixierplatte 55 einen im Wesentlichen U-förmigen Abschnitt 72. Die Schlauchschelle 59 wird dabei zwischen der Fixierplatte 55 sowie der Trägerplatte 47 und somit in dem U-förmigen Abschnitt 72 angeordnet. Die Fixierplatte 55 weist eine Öffnung 56 auf, in die der zwischen den beiden Eingreifelementen 48, 49 angeordnete Schenkel 50 eingebracht werden kann. Damit der Schenkel 50 ohne den Einsatz eines Biegewerkzeugs in die Öffnung 56 eingebracht werden kann, ist der Schenkel 50 als Schnappelement ausgebildet. Dieser Schenkel 50 ist dazu zumindest teilweise durch die Öffnung 56 durchgeführt und weist an einem freien Ende 57 einen gebogenen Abschnitt 73 auf, der oberhalb der Öffnung 56 der Fixierplatte 55 angeordnet ist. Durch diesen gebogenen Abschnitt 73 wird gewährleistet, dass die Fixierplatte 55 parallel zur Trägerplatte 55 angeordnet bleibt. Der als Schnappelement ausgebildete Schenkel 50 kann natürlich auch eine andere Form haben, mit der gewährleistet wird, dass die Fixierplatte 55 parallel zur Trägerplatte 47 fixiert werden kann. Solche Schnappelemente sind an sich bekannt.

Bei dieser Variante des Halteelements 46 bilden die beiden einander gegenüberliegenden Seiten 51, 52 jeweils die Schmalseiten der Trägerplatte 47.

Soll die Schlauchschelle 59 mit dem Halteelement 46 an einem Schlauch fixiert werden, so erfolgt die Befestigung der Schlauchschelle 59 wie folgt. Ein Schlauch ist in Figur 5 der Einfachheit halber nicht dargestellt.

Zuerst wird das Halteelement 46 auf ein Ende eines Schlauchs gesetzt, wobei die Eingreifelemente 48, 49 in das Ende des Schlauchs eingebracht werden. Anschließend werden die spitzen Enden der Eingreifelemente 48, 49 gebogen, so dass das Halteelemente 46 fest auf dem Schlauch aufsitzt und nicht mehr verrutschen kann. Der Schenkel 50 sowie die Fixierplatte 55 sind in diesem Stadium vertikal zur Trägerplatte 47 angeordnet. Die vertikale Anordnung der Fixierplatte 55 in Bezug auf die Trägerplatte 47 ist durch eine gestrichelte Linie angedeutet.

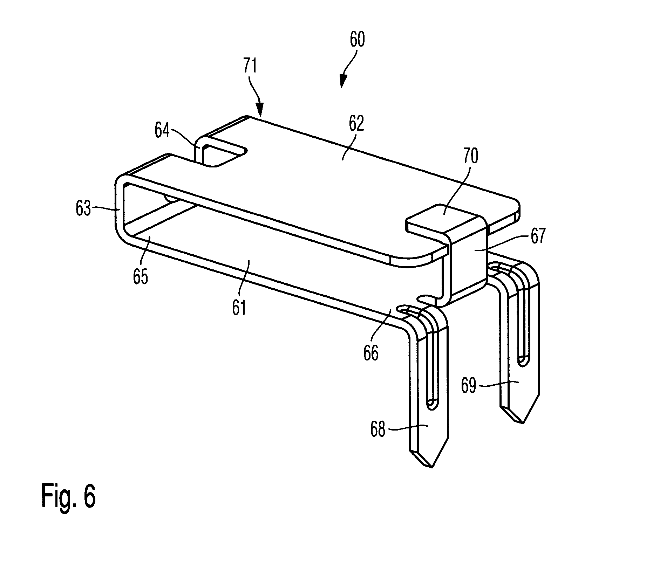

Nun wird die Schlauchschelle 59 auf die Trägerplatte 47 gelegt. Nachdem die Schlauchschelle 59 auf die Trägerplatte 47 gelegt wurde, wird die Fixierplatte 55 parallel zur Trägerplatte 47 angeordnet. Dazu wird die Fixierplatte 55 von der vertikalen Position in eine horizontale Position bewegt, was durch den Richtungspfeil 58 angedeutet ist. Durch die Bewegung der Fixierplatte 55 in Richtung des Pfeils 58 wird die Fixierplatte 55 parallel zur Trägerplatte 47 angeordnet, so dass die beiden nebeneinander angeordneten Schenkel 53, 54 mit der Trägerplatte 47 sowie der parallel dazu angeordneten Fixierplatte 55 den im Wesentlichen U-förmigen Abschnitt 72 bilden. Da das freie Ende 57 des Schenkels 50 den gebogenen Abschnitt 73 aufweist, wird die Fixierplatte 55 in dieser Position gehalten, weil der gebogene Abschnitt 73 verhindert, dass die Fixierplatte 55 wieder in die vertikale Position bewegt werden kann. Dadurch wird auch die Schlauchschelle 59 fest in dem Halteelement 46 fixiert wird. In Figur 6 ist eine weitere erfindungsgemässe Variante eines Halteelements 60 gezeigt. Auch bei diesem Halteelemente 60 ist eine Trägerplatte 61 mit einer Fixierplatte 62 über zwei nebeneinander angeordnete Schenkel 63, 64 verbunden. Auf der Trägerplatte 61 kann eine in der Figur 6 nicht dargestellte Schlauchschelle aufliegen. Die Fläche der Trägerplatte 61 entspricht dabei ungefähr der Fläche der Fixierplatte 62, womit die Fixierplatte 62 die Trägerplatte 61 im Wesentlichen vollständig überdeckt. Dadurch, dass die Fixierplatte 62 mit der Trägerplatte 61 über die beiden Schenkel 63, 64 verbunden ist, weist auch das Haltelement 60 einen im Wesentlichen U-förmigen Abschnitt 71 auf. Die beiden Schenkel 63, 64 sind auf einer ersten Seite 65 der Trägerplatte 61 angebracht. An der der ersten Seite 65 der Trägerplatte 61 gegenüberliegenden zweiten Seite 66 ist ein Schenkel 67 zwischen zwei Eingreifelementen 68, 69 angeordnet. Der Schenkel 67 weist ein freies gebogenes Ende 70 auf, das sich im montierten Zustand oberhalb der Fixierplatte 62 befindet. Die beiden Seiten 65, 66 bilden dabei die beiden Schmalseiten des Halteelements 60. Im Unterschied zu dem in Figur 5 dargestellten Halteelement 46 weist die Fixierplatte 62 jedoch keine Öffnung auf, in die der zwischen den beiden Eingreifelemente 68, 69 angeordnete Schenkel 67 eingreifen kann. Stattdessen ist der Schenkel 67 mit seinem gebogenen Ende 70 einfach oberhalb der Fixierplatte 62 angeordnet, wodurch das oberhalb der Fixierplatte 62 angeordnete freie gebogene Ende 70 des Schenkels 67 gewährleistet, dass die Fixierplatte 62 parallel zur Trägerplatte 61 angeordnet bleibt.

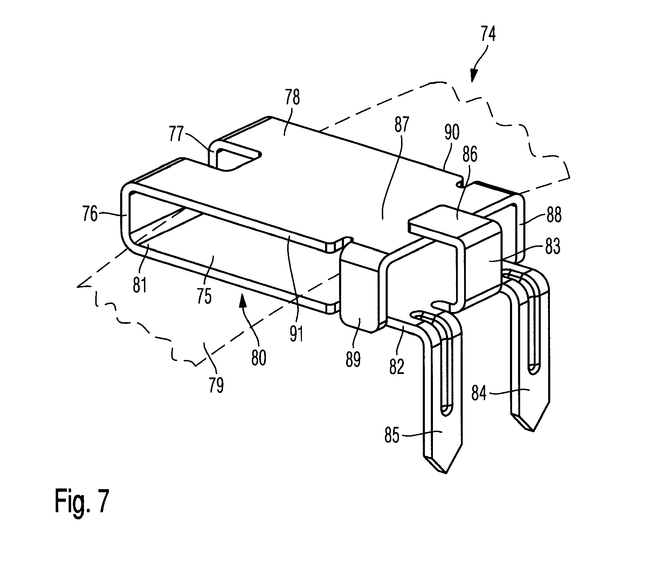

In Figur 7 ist eine weitere erfindungsgemässe Variante eines Halteelements 74 gezeigt. Der Aufbau dieses Halteelements 74 entspricht im Wesentlichen dem Aufbau des Halteelements 60 gemäß Figur 6. Bei diesem Halteelement 74 ist ebenfalls eine Trägerplatte 75 über zwei nebeneinander angeordnete Schenkel 76, 77 mit einer Fixierplatte 78 verbunden. Auf der Trägerplatte 75 kann eine in der Figur 6 durch gestrichelte Linien dargestellte Schlauchschelle 79 aufliegen. Auch bei dieser Variante entspricht die Fläche der Trägerplatte 75 in etwa der Fläche der Fixierplatte 78, womit die Fixierplatte 78 die Trägerplatte 75 im Wesentlichen vollständig überdeckt. Da die Fixierplatte 78 mit der Trägerplatte 75 über die beiden Schenkel 76, 77 verbunden ist, weist auch das Haltelement 74 einen im Wesentlichen U-förmigen Abschnitt 80 auf. Die beiden Schenkel 76, 77 sind auf einer ersten Seite 81 der Trägerplatte 75 angebracht. An der der ersten Seite 81 der Trägerplatte 75 gegenüberliegenden zweiten Seite 82 ist ein Schenkel 83 zwischen zwei Eingreifelementen 84, 85 angeordnet. Die beiden gegenüberliegenden Seiten 81, 82 bilden jeweils die Schmalseite der Trägerplatte 75. Dabei weist auch der Schenkel 83 ein freies gebogenes Ende 86 auf, so dass der Schenkel 83 mit seinem gebogenen Ende 86 oberhalb der Fixierplatte 78 angeordnet ist. Dadurch wird gewährleistet, dass zum einen die Schlauchschelle nicht aus dem U-förmigen Abschnitt 71 herausrutschen kann und zum anderen der U-förmige Abschnitt 71 seine Form behält, weil durch das oberhalb der Fixierplatte 78 angeordnete freie gebogene Ende 86 des Schenkels 83 gewährleistet wird, dass die Fixierplatte 78 parallel zur Trägerplatte 75 angeordnet bleibt. Damit gerade eine schmale Schlauchschelle 79 fest auf der Trägerplatte 75 angeordnet bleibt und nicht verrutscht, sind an einem freien Ende 87 der Fixierplatte 78 zwei Schenkel 88, 89 vorgesehen, die im montierten Zustand in Richtung der Trägerplatte 75 und damit auch in Richtung des in Figur 7 nicht gezeigten Schlauchs weisen. Die beiden Schenkel 88, 89 liegen einander gegenüber und sind jeweils an der Breitseite 90 bzw. 91 der Fixierplatte 78 angebracht. Dadurch wird die auf der Trägerplatte 75 aufliegende Schlauchschelle 79 zwischen den beiden an der ersten Schmalseite 81 der Trägerplatte befindlichen Schenkeln 76, 77 sowie den beiden an der Fixierplatte 78 angeordneten Schenkeln 88, 89 fixiert.

Soll mittels des Halteelements 74 eine Schlauchschelle fixiert werden, die breiter ist als die in Figur 7 durch eine gestrichelte Linie angedeutete Schlauchschelle 79, so ist dies ebenfalls möglich. Dazu müssen die beiden Schenkel 88, 89 nach oben geklappt werden, d. h. in eine horizontale Position gebracht werden.

Es versteht sich, dass zum Beispiel bei den Halteelementen 60, 74 oder auch 28 auch mehr als nur ein Schenkel zwischen den entsprechenden Eingreifelementen - also wenigstens ein Schenkel - vorgesehen sein kann. Auch kann anstelle von zwei nebeneinander angeordneten Schenkeln 53, 54, 63, 64, 76, 77 bei den Halteelementen 46, 60, 74 auch nur ein Schenkel vorgesehen werden, der sich dabei auch über die gesamte Schmalseite erstrecken kann.

Vorteilhaft bei diesen erfindungsgemäßen Halteelementen ist, dass diese sehr kompakt und einfach aufgebaut sind, da diese lediglich zwei oder drei Schenkel umfassen. Die Eingreifelemente sind dabei direkt an der Trägerplatte für eine Schlauchschelle angebracht. Dies ist beispielsweise bei den in DE 10 2008 013 207 beschriebenen Halteelementen nicht der Fall, weil die Eingreifelemente bei diesen Halteelementen an einem Verlängerungsabschnitt angeordnet sind, der sich direkt an die Trägerplatte anschließt. Durch Fortlassen des Verlängerungsabschnitts verringert sich der Schnittabfall, der beim Ausstanzen der Formen mittels eines Stanzwerkzeugs aus einem Metallband entsteht. Bei der Herstellung der Halteelemente wird nämlich in der Regel ein Kaltband verwendet, aus dem die Formen hintereinander und kontinuierlich ausgestanzt werden. Die Breite des Bandes bestimmt dabei auch den Preis des so hergestellten Halteelements.

Vorteilhaft ist ferner, dass die Halteelemente der vorliegenden Erfindung näher an dem Schlauchende montiert werden können, weil die Halteelemente keine Verlängerungsabschnitte aufweisen. Die Schlauchschelle, welche durch die Halteelemente positioniert wird, kann somit weiter hinten am Anschlussstutzen angeordnet werden, der in dem Schlauch eingebracht ist. Der Abstand der Schlauchschelle zum Schlauchende kann dabei weniger als 5 mm betragen. Dadurch kann der Schlauch noch fester an dem Anschlussstutzen befestigt werden.

Weisen die Halteelemente eine Fixierplatte auf, die parallel zur Trägerplatte angeordnet ist, so wird eine auf der Trägerplatte aufliegende Schlauchschelle vollständig überdeckt, wodurch die Schlauchschelle noch besser durch das Halteelement fixiert wird, weil die Schlauchschelle von einem im Wesentlichen kastenförmigen Gebilde und damit von vier Seiten umschlossen wird.

Obwohl die Ausführungsbeispiele der Erfindung oben detailliert beschrieben wurden, ist die Erfindung nicht auf diese Ausführungsbeispiele beschränkt. Ein Fachmann versteht, dass die Erfindung verschiedene Varianten mit umfasst, mit denen dasselbe Ergebnis erzielt wird wie mit den hier beschriebenen Ausführungsbeispielen. Es ist deshalb für den Fachmann klar, dass mit den hier beschriebenen Ausführungsbeispielen der Schutzumfang der Ansprüche nicht eingeschränkt wird und dass es weitere Varianten, Modifikationen und Alternativen gibt, die unter den Schutzumfang der Ansprüche fallen.

### Bezugszeichenliste

- 1: Halteelement
- 2: Trägerplatte
- 3: erste Seite der Trägerplatte 2
- 4: erster Schenkel
- 5: erster Schenkel
- 6: zweiter Abschnitt von Schenkel 4
- 7: zweiter Abschnitt von Schenkel 5
- 8: zweite Seite der Trägerplatte 2
- 9: zweiter Schenkel
- 10: Eingreifelement
- 11: Eingreifelement
- 12: spitzes Ende von 10
- 13: spitzes Ende von 11
- 14: zweiter Abschnitt von Schenkel 9
- 15: Bereich des Schenkels 9
- 16: Pfeil
- 17: Schlauchende
- 18: Schlauch
- 19: Schellenfixierung
- 20: Schlauchschelle
- 21: Halteelement
- 22: gekrümmtes Band
- 23: Schraubengehäuse
- 24: Schraube
- 25: erster Schenkel
- 26: erster Schenkel
- 27: zweiter Schenkel
- 28: Halteelement
- 29: Trägerplatte
- 30: erster Schenkel
- 31: zweiter Schenkel
- 32: erste Seite der Trägerplatte 29
- 33: zweite Seite der Trägerplatte 29
- 34: zweiter Abschnitt von Schenkel 30
- 35: zweiter Abschnitt von Schenkel 31
- 36: Eingreifelement
- 37: Eingreifelement
- 38: spitzes Ende
- 39: spitzes Ende
- 40: erster Abschnitt von Schenkel 4
- 41: erster Abschnitt von Schenkel 5
- 42: erster Abschnitt von Schenkel 9
- 43: erster Abschnitt von Schenkel 30
- 44: erster Abschnitt von Schenkel 31
- 45: Pfeil
- 46: Halteelement
- 47: Trägerplatte
- 48: Eingreifelement
- 49: Eingreifelement
- 50: Schenkel
- 51: zweite Seite der Trägerplatte 47
- 52: erste Seite der Trägerplatte 47
- 53: Schenkel
- 54: Schenkel
- 55: Fixierplatte
- 56: Öffnung der Fixierplatte 55
- 57: freies Ende des Schenkels 50
- 58: Pfeil
- 59: Schlauchschelle
- 60: Halteelement
- 61: Trägerplatte
- 62: Fixierplatte
- 63: Schenkel
- 64: Schenkel
- 65: erste Seite der Trägerplatte 61
- 66: zweite Seite der Trägerplatte 61
- 67: Schenkel
- 68: Eingreifelement
- 69: Eingreifelement
- 70: freies Ende des Schenkels 67
- 71: U-förmiger Abschnitt
- 72: U-förmiger Abschnitt
- 73: Abschnitt des Schenkels 50
- 74: Halteelement
- 75: Trägerplatte
- 76: Schenkel
- 77: Schenkel
- 78: Fixierplatte
- 79: Schlauchschelle
- 80: U-förmiger Abschnitt
- 81: erste Seite der Trägerplatte 75
- 82: zweite Seite der Trägerplatte 75
- 83: Schenkel
- 84: Eingreifelement
- 85: Eingreifelement
- 86: gebogenes Ende des Schenkels 83
- 87: freies Ende der Fixierplatte 78
- 88: Schenkel
- 89: Schenkel
- 90: Breitseite der Fixierplatte 78
- 91: Breitseite der Fixierplatte 78
- 92: erster Abschnitt des Schenkels 53
- 93: erster Abschnitt des Schenkels 54
- 94: erster Abschnitt des Schenkels 50
- 95: zweiter Abschnitt des Schenkels 53
- 96: zweiter Abschnitt des Schenkels 54

## Patentansprüche

1. Halteelement (46) für eine Schellenfixierung (19), enthaltend eine Trägerplatte (47) für die Auflage einer Schlauchschelle (20); zwei nebenainander angeordnete Schenkel (53, 54), die an einer ersten Seite (52)
der Trägerplatte (47) angeordnet sind; und einen weiteren Schenkel (50), der an einer zweiten Seite (51) der Trägerplatte (47) angeordnet ist, **dadurch gekennzeichnet, dass** der weitere Schenkel (50) zwischen zwei Eingreifelementen (48, 49) zum Eingreifen in ein Schlauchende angeordnet ist, wobei an den beiden an der ersten Seite (52) der Trägerplatte (47) nebeneinander angeordneten Schenkeln (53, 54) eine Fixierplatte (55) angebracht ist, die eine Fläche aufweist, die im Wesentlichen der Fläche der Trägerplatte (47) entspricht, womit die Fixierplatte (55) die Trägerplatte (47) im Wesentlichen vollständig überdeckt.

2. Halteelement (46) nach Anspruch 1, **dadurch gekennzeichnet, dass** die nebeneinander angeordneten Schenkel (53, 54) sowie der weitere Schenkel (50) im montierten Zustand jeweils einen ersten Abschnitt (92, 93, 94) sowie einen zweiten Abschnitt (95, 96) aufweisen, wobei der erste Abschnitt an der Trägerplatte (47) und der zweite Abschnitt im Wesentlichen senkrecht an dem ersten Abschnitt angeordnet ist, wodurch die Schenkel (50, 53, 54) im Wesentlichen L-förmig ausgebildet sind.

3. Halteelement (46) nach Anspruch 2, **dadurch gekennzeichnet, dass** der erste Abschnitt (92, 93, 94) eines jeden Schenkels (50, 53, 54) im Wesentlichen senkrecht zu der Trägerplatte (47) und der zweite Abschnitt (95, 96) im Wesentlichen parallel zu der Trägerplatte (47) angeordnet ist.

4. Halteelement (46) nach Anspruch 1, **dadurch gekennzeichnet, dass** die erste Seite (52) der Trägerplatte (47) sowie die zweite Seite (51) der Trägerplatte einander gegenüber liegen und jeweils eine Schmalseite der Trägerplatte (47) bilden.

5. Halteelement (46) nach Anspruch 1, **dadurch gekennzeichnet, dass** die Fixierplatte (55) im montierten Zustand parallel zur Trägerplatte (47) angeordnet ist.

6. Halteelement (46) nach Anspruch 5, **dadurch gekennzeichnet, dass** die Trägerplatte (47), die beiden nebeneinander angeordneten Schenkel (53) sowie die Fixierplatte (55) im montierten Zustand einen im Wesentlichen U-förmigen Abschnitt (71) bilden.

7. Halteelement (46) nach Anspruch 1, **dadurch gekennzeichnet, dass** an einem freien Ende (87) der Fixierplatte (78) zwei Schenkel (88, 89) vorgesehen sind, die im montierten Zustand in Richtung der Trägerplatte (75) weisen, wobei die beiden Schenkel (88, 89) einander gegenüber liegen und jeweils an der Breitseite (90, 91) der Fixierplatte (78) angebracht sind, wodurch eine auf der Trägerplatte (75) aufliegende Schlauchsschelle (79) zwischen den beiden an der ersten Schmalseite (81) der Trägerplatte (75) angebrachten Schenkeln (76, 77) sowie den beiden an der Fixierplatte (78) angeordneten Schenkeln (88, 89) fixierbar ist.

8. Halteelement (46) nach Anspruch 1, **dadurch gekennzeichnet, dass** die Fixierplatte (55) an einem freien Ende eine Öffnung (56) aufweist.

9. Halteelement (46) nach Anspruch 8, **dadurch gekennzeichnet, dass** der an der zweiten Seite (51) der Trägerplatte (47) angeordnete Schenkel (50) ein Schnappelement bildet und zumindest teilweise durch die Öffnung (56) der Fixierplatte (55) durchführbar ist, wodurch die Fixierplatte (55) durch den Schenkel (50) fixierbar ist.

## Claims

1. Retaining element (46) for a clamp-fixing means (19), containing a carrier plate (47) for bearing a hose clamp (20); also containing two limbs (53, 54), which are arranged one beside the other on a first side (52) of the carrier plate (47); and containing a further limb (50), which is arranged on a second side (51) of the carrier plate (47), **characterized in that** the further limb (50) is arranged between two engagement elements (48, 49) for engaging in one end of the hose, wherein the two limbs (53, 54), which are arranged one beside the other on the first side (52) of the carrier plate (47), have fixed on them a fixing plate (55), which has a surface area corresponding essentially to the surface area of the carrier plate (47), whereby the fixing plate (55) essentially fully covers over the carrier plate (47).

2. Retaining element (46) according to Claim 1, **characterized in that** the limbs (53, 54), which are arranged one beside the other, and the further limb (50), in the installed state, each have a first portion (92, 93, 94) and a second portion (95, 96), wherein the first portion is arranged on the carrier plate (47) and the second portion is arranged essentially perpendicularly on the first portion, as a result of which the limbs (50, 53, 54) are of essentially L-shaped design.

3. Retaining element (46) according to Claim 2, **characterized in that** the first portion (92, 93, 94) of each limb (50, 53, 54) is arranged essentially perpendicularly to the carrier plate (47) and the second portion (95, 96) is arranged essentially parallel to the carrier plate (47).

4. Retaining element (46) according to Claim 1, **characterized in that** the first side (52) of the carrier plate (47) and the second side (51) of the carrier plate are located opposite one another and each form a narrow side of the carrier plate (47).

5. Retaining element (46) according to Claim 1, **characterized in that** the fixing plate (55), in the installed state, is arranged parallel to the carrier plate (47).

6. Retaining element (46) according to Claim 5, **characterized in that** the carrier plate (47), the two limbs (53, 54), which are arranged one beside the other, and the fixing plate (55), in the installed state, form an essentially U-shaped portion (71).

7. Retaining element (46) according to Claim 1, **characterized in that** a free end (87) of the fixing plate (78) has provided on it two limbs (88, 89) which, in the installed state, are oriented in the direction of the carrier plate (75), wherein the two limbs (88, 89) are located opposite one another and are each fitted on the broad side (90, 91) of the fixing plate (78), as a result of which a hose clamp (79) resting on the carrier plate (75) can be fixed between the two limbs (76, 77), which are fitted on the first narrow side (81) of the carrier plate (75), and the two limbs (88, 89), which are arranged on the fixing plate (78).

8. Retaining element (46) according to Claim 1, **characterized in that** the fixing plate (55) has an opening (56) at a free end.

9. Retaining element (46) according to Claim 8, **characterized in that** the limb (50), which is arranged on the second side (51) of the carrier plate (47), forms a snap-fit element and can be guided, at least in part, through the opening (56) of the fixing plate (55), as a result of which the fixing plate (55) can be fixed by the limb (50).

## Revendications

1. Élément de retenue (46) pour une fixation de collier de serrage (19), contenant une plaque de support (47) pour le support d'un collier de serrage de tuyau (20) ; deux branches (53, 54) disposées l'une à côté de l'autre, qui sont disposées sur un premier côté (52) de la plaque de support (47) ; et une branche supplémentaire (50) qui est disposée sur un deuxième côté (51) de la plaque de support (47), **caractérisé en ce que** la branche supplémentaire (50) est disposée entre deux éléments d'engagement (48, 49) destinés à l'engagement dans une extrémité du collier de serrage, une plaque de fixation (55) étant disposée au niveau des deux branches (53, 54) disposées l'une à côté de l'autre sur le premier côté (52) de la plaque de support (47), laquelle plaque de fixation présente une surface qui correspond essentiellement à la surface de la plaque de support (47), la plaque de fixation (55) recouvrant ainsi essentiellement complètement la plaque de support (47).

2. Élément de retenue (46) selon la revendication 1, **caractérisé en ce que** les branches (53, 54) disposées l'une à côté de l'autre ainsi que la branche supplémentaire (50) présentent dans l'état monté à chaque fois une première portion (92, 93, 94) ainsi qu'une deuxième portion (95, 96), la première portion étant disposée au niveau de la plaque de support (47) et la deuxième portion étant disposée essentiellement perpendiculairement au niveau de la première portion, de sorte que les branches (50, 53, 54) soient réalisées essentiellement en forme de L.

3. Élément de retenue (46) selon la revendication 2, **caractérisé en ce que** la première portion (92, 93, 94) de chaque branche (50, 53, 54) est disposée essentiellement perpendiculairement à la plaque de support (47) et la deuxième portion (95, 96) est disposée essentiellement parallèlement à la plaque de support (47).

4. Élément de retenue (46) selon la revendication 1, **caractérisé en ce que** le premier côté (52) de la plaque de support (47) ainsi que le deuxième côté (51) de la plaque de support sont opposés l'un à l'autre et forment à chaque fois un côté étroit de la plaque de support (47).

5. Élément de retenue (46) selon la revendication 1, **caractérisé en ce que** la plaque de fixation (55), dans l'état monté, est disposée parallèlement à la plaque de support (47).

6. Élément de retenue (46) selon la revendication 5, **caractérisé en ce que** la plaque de support (47), les deux branches disposées l'une à côté de l'autre (53, 54) ainsi que la plaque de fixation (55), dans l'état monté, forment une portion (71) essentiellement en forme de U.

7. Élément de retenue (46) selon la revendication 1, **caractérisé en ce qu'**au niveau d'une extrémité libre (87) de la plaque de fixation (78) sont prévues deux branches (88, 89), qui, dans l'état monté, sont tournées dans la direction de la plaque de support (75), les deux branches (88, 89) étant opposées l'une à l'autre et étant disposées à chaque fois sur le côté large (90, 91) de la plaque de fixation (78), de sorte qu'un collier de serrage de tuyau (79) reposant sur la plaque de support (75) puisse être fixé entre les deux branches (76, 77) montées sur le premier côté étroit (81) de la plaque de support (75) et les deux branches (88, 89) disposées au niveau de la plaque de fixation (78).

8. Élément de retenue (46) selon la revendication 1, **caractérisé en ce que** la plaque de fixation (55) présente une ouverture (56) au niveau d'une extrémité libre.

9. Élément de retenue (46) selon la revendication 8, **caractérisé en ce que** la branche (50) disposée sur le deuxième côté (51) de la plaque de support (47) forme un élément d'encliquetage et peut être guidée au moins en partie à travers l'ouverture (56) de la plaque de fixation (55), de sorte que la plaque de fixation (55) puisse être fixée par la branche (50).
